(19) Europäisches Patentamt
European Patent Office
Office européen des brevets

(11) EP 0 618 238 B1

(12) EUROPEAN PATENT SPECIFICATION

(45) Date of publication and mention of the grant of the patent:
**18.12.1996 Bulletin 1996/51**

(51) Int Cl.[6]: **C08F 8/30**

(21) Application number: **93105241.9**

(22) Date of filing: **30.03.1993**

# (54) Aqueous crosslinking resin composition

Wässrige Vernetzungsharzzusammensetzung

Composition aqueuse de résine réticulante

(84) Designated Contracting States:
**DE FR GB**

(43) Date of publication of application:
**05.10.1994 Bulletin 1994/40**

(73) Proprietor: **Mitsubishi Chemical BASF Company Limited
Yokkaichi-shi, Mie (JP)**

(72) Inventors:
- **Aoki, Masahiro, c/o Mitsubishi Yuka
Yokkaichi-shi, Mie (JP)**
- **Tsukamoto, Takeo, c/o Mitsubishi Yuka
Yokkaichi-shi, Mie (JP)**
- **Hayashi, Ryutaro, c/o Mitsubishi Yuka
Yokkaichi-shi, Mie (JP)**
- **Kato, Yoshinori, c/o Mitsubishi Yuka
Yokkaichi-shi, Mie (JP)**
- **Awata, Takeshi, c/o Mitsubishi Yuka
Yokkaichi-shi, Mie (JP)**

(74) Representative:
**Hansen, Bernd, Dr. Dipl.-Chem. et al
Hoffmann, Eitle & Partner
Patent- und Rechtsanwälte,
Postfach 81 04 20
81904 München (DE)**

(56) References cited:
**EP-A- 0 005 167** **EP-A- 0 219 046**
**GB-A- 1 421 130**

- **CHEMICAL ABSTRACTS, vol. 96, no. 24, June 1982, Columbus, Ohio, US; abstract no 201337w.**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 618 238 B1

## Description

This invention relates to an aqueous crosslinking resin composition which readily undergoes a crosslinking reaction at room temperature to provide a crosslinked film excellent in water resistance, solvent resistance, adhesion to a substrate, such as a metal, an inorganic material, a plastic article, a coated article, etc., and hardness.

An aqueous crosslinking resin composition comprising a carbonyl-containing resin aqueous emulsion obtained by emulsion copolymerization of a monomer containing a carbonyl group based on an aldo group or a keto group and a hydrazine derivative having at least two hydrazino groups ($-NHNH_2$) per molecule is known as disclosed, e.g., in JP-A-54-144432 (corresponding to U.S. Patent 4,267,091) (the term "JP-A" as used herein means an "unexamined published Japanese patent application"). The resin composition of this type is advantageous in that it has room temperature crosslinkability and is of one-pack type easy to use, but still needs further improvement in terms of film properties, such as adhesion to a substrate, and water resistance,

EP-A 0 219 046 discloses storage stable crosslinkable resin compositions obtained by reaction of (A) polymeric organic compounds having carbonyl groups in the presence of (B) monoketones and/or monoaldehydes with (C) polyhydrazides. EP-A 0 005 167 discloses binder for paints comprising (A) an emulsion of a copolymer, (B) an aliphatic dihydrazine compound and (C) a water-soluble salt of zinc, manganese, cobalt and/or lead. CHEMICAL ABSTRACTS volume 96 (1982) No. 24 201 337w discloses aqueous dispersions of carbonyl group containing copolymer granules containing hydrazine derivatives for coatings having good strength.

An object of the present invention is to provide an aqueous crosslinking resin composition which provides a crosslinked film having markedly improved adhesion to a substrate, well-balanced resistance to water and solvents, and hardness.

The present invention relates to an aqueous crosslinking resin composition comprising (I) an aqueous resin dispersion obtained by emulsion polymerization of a monomer mixture consisting of (a) 0.5% to 50% by weight of an unsaturated carboxylic acid monomer, (b) 0.5% to 60% by weight of a carbonyl-containing unsaturated monomer containing at least one carbonyl group based on an aldo group or a keto group, and (c) 30% to 99% by weight of other unsaturated monomer(s) copolymerizable with monomers (a) and (b), and (II) a hydrazine derivative having at least two hydrazino groups ($-NHNH_2$) per molecule, wherein the resin content in the aqueous resin dispersion (I) has been solubilized to a degree of at least 5% by weight by addition of an alkali and/or an organic solvent.

Aqueous resin dispersion (I) which can be used in the present invention is an aqueous dispersion of a copolymer resin obtained by emulsion polymerization of a specific monomer mixture comprising monomers (a) to (c).

Unsaturated carboxylic acid monomer (a) includes unsaturated mono- and polycarboxylic acids having from 3 to 5 carbon atoms, such as acrylic acid, methacrylic acid, itaconic acid, and maleic acid. These unsaturated carboxylic acid monomers may be used either individually or in combination of two or more thereof.

Monomer (a) is used in an amount of not less than 0.5% by weight, not more than 50% by weight, and preferably from 2 to 30% by weight, based on the monomer mixture. If the proportion of monomer (a) is less than 0.5% by weight, sufficient solubilization of the dispersed resin by addition of an alkali and/or an organic solvent cannot be achieved. If it is more than 50% by weight, the crosslinked film exhibits improved solvent resistance but tends to have reduced water resistance.

Carbonyl-containing unsaturated monomer (b) is a polymerizable unsaturated compound containing at least one carbonyl group based on an aldo group or a keto group (hereinafter simply referred to as a carbonyl-containing unsaturated monomer). Therefore, polymerizable unsaturated monomers which contain a carbonyl group based on a carboxyl group, a carboxylic acid ester group, a carboxylic acid amido group, etc. are not included under carbonyl-containing unsaturated monomer (b).

Specific examples of carbonyl-containing unsaturated monomer (b) include acrolein, diacetone acrylamide, formylstyrol, a vinyl alkyl ketone having from 4 to 7 carbon atoms (e.g., vinyl methyl ketone, vinyl ethyl ketone or vinyl butyl ketone), diacetone acrylate, acetonitrile acrylate, diacetone methacrylate, 2-hydroxypropyl acrylate acetylacetate, and butanediol-1,4-acrylate acetylacetate, and a (meth)acryloxyalkylpropenal represented by formula:

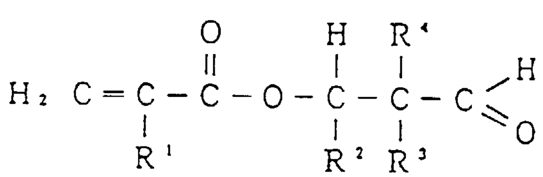

wherein $R^1$ represents a hydrogen atom or a methyl group; $R^2$ represents a hydrogen atom or an alkyl group having from 1 to 3 carbon atoms; $R^3$ represents an alkyl group having from 1 to 3 carbon atoms; and $R^4$ represents an alkyl

group having from 1 to 4 carbon atoms.
Preferred of them are diacetone acrylamide, acrolein, and vinyl methyl ketone. These carbonyl-containing unsaturated monomers may be used either individually or in combination of two or more thereof.

Carbonyl-containing unsaturated monomer (b) is used in an amount of not less than 0.5% by weight, not more than 60% by weight, and preferably from 5 to 50% by weight, based on the monomer mixture. If the proportion of monomer (b) is less than 0.5% by weight, the crosslink density achieved by the reaction with hydrazine derivative (II) is reduced, and the physical properties of the crosslinked film, such as water resistance and solvent resistance, are insufficient as a result. If the proportion of monomer (b) is more than 60% by weight, no further improvements can be obtained.

Other copolymerizable unsaturated monomer (c), selected from those exclusive of monomers (a) and (b), includes alkyl acrylates or methacrylates having from 1 to 8 carbon atoms in the alkyl moiety thereof (e.g., methyl, ethyl, isopropyl, n-propyl, n-butyl, isobutyl, or t-butyl ester of acrylic acid or methacrylic acid), glycidyl methacrylate, glycol mono- or diacrylates, glycol mono- or dimethacrylates, aromatic vinyl compounds (e.g., styrene), vinyl halides (e.g., vinyl chloride and vinyl bromide), vinylidene chloride, acrylonitrile, methacrylonitrile, and saturated carboxylic acid vinyl esters (e.g., vinyl acetate and vinyl propionate).

Furthermore, unsaturated carboxylic acid amides (e.g., acrylamide, methacrylamide, and itaconic acid amide), N-alkyl and/or N-alkylol derivatives of unsaturated carboxylic acid amides (e.g., N-methylacrylamide, N-isobutylacrylamide, N-methylolacrylamide, N-methylolmethacrylamide, and N-ethoxymethylacrylamide), unsaturated sulfonic acids (e.g., vinylsulfonic acid and methylacrylamidepropanesulfonic acid), and hydroxyl-containing unsaturated monomers (e.g., hydroxyethyl methacrylate and hydroxypropyl acrylate) can be used as unsaturated monomers (c). These monomers are effective to ensure solubilization of the resulting dispersed resin by addition of an alkali and/or an organic solvent.

These unsaturated monomers (c) may be used either individually or in combination of two or more thereof and are selected appropriately according to a degree of solubilization as desired and the end use of the resulting aqueous crosslinking resin composition. Unsaturated monomers (c) are used in a total proportion of not more than 99% by weight, not less than 30% by weight, based on the monomer mixture.

Emulsion polymerization for preparing aqueous resin dispersion (I) can be carried out by (A) a method of using an ordinary emulsifying agent or (B) a method of using a copolymer dispersant, and particularly a water-soluble or alkali-soluble carbonyl-containing copolymer dispersant.

Emulsifying agents which can be used in method (A) include anionic surface active agents, such as higher alcohol sulfates, alkylbenzenesulfonates, polyoxyethylene alkylsulfates, polyoxyethylene alkylphenol ether sulfates, vinylsulfonates, and vinylsulfosuccinates; and nonionic surface active agents, such as polyoxyethylene alkyl ethers, polyoxyethylene alkylphenol ethers, ethylene oxide-propylene oxide block copolymers, and sorbitan derivatives.

The copolymer dispersant which can be used in method (B) preferably includes copolymers comprising (i) from 0.5 to 99.5% by weight of a carbonyl-containing monomer unit having at least one carbonyl group based on aldo or keto group and one polymerizable double bond per molecule, (ii) from 0.5 to 99.5% by weight of a monomer unit selected from the group consisting of a unit derived from a mono-olefinic unsaturated carboxylic acid having from 3 to 5 carbon atoms, a unit derived from a mono-olefinic unsaturated carboxylic acid amide having from 3 to 5 carbon atoms, a unit derived from an N-alkyl and/or N-alkylol derivative of a mono-olefinic unsaturated carboxylic acid amide having from 3 to 5 carbon atoms, and an amino-containing monomer unit (e.g., N,N-dimethylaminoethyl methacrylate and N,N-diethylamino methacrylate), and (iii) not more than 70% by weight of a monomer unit selected from the group consisting of an alkyl acrylate or alkyl methacrylate unit having from 1 to 8 carbon atoms in the alkyl moiety thereof, an aromatic vinyl monomer unit, a vinyl halide unit, an ethylene unit, an acrylonitrile unit, a methacrylonitrile unit, a saturated carboxylic acid vinyl ester unit, a hydroxyl-containing monomer unit (e.g., hydroxyethyl acrylate or hydroxyethyl methacrylate), and a 1,3-diene unit. The copolymer dispersant can easily be prepared by emulsion polymerization of a monomer mixture comprising monomers (i) to (iii) in substantially the same proportion as mentioned above in water or an organic solvent, if desired, in the presence of an alkali, e.g., NaOH or aqueous ammonia.

Emulsion polymerization in accordance with either method (A) or (B) is conducted in an aqueous medium in the presence of a polymerization initiator. Polymerization initiators which can be used preferably include persulfates, such as potassium persulfate and ammonium persulfate; peroxides, such as hydrogen peroxide, benzoyl peroxide, cumene hydroperoxide, and t-butyl hydroperoxide; and azobisisobutyronitrile. In particular, water-soluble initiators and redox initiators are preferred.

Since the copolymer dispersant used in method (B) also takes part in crosslinking, the aqueous crosslinking resin composition containing aqueous resin dispersion (I) prepared by method (B) is superior to that containing aqueous resin dispersion (I) prepared by method (A) in terms of physical properties of the crosslinked film.

A chain transfer agent is preferably used in emulsion polymerization, either by method (A) or by method (B). Where aqueous resin dispersion (I) is prepared in the presence of a chain transfer agent, the resulting aqueous crosslinking resin composition exhibits markedly improved film properties, especially adhesion to a substrate, probably because

presence of a chain transfer agent reduces the molecular weight of the copolymer resin produced, which seems to facilitate the solubilization with an alkali and/or an organic solvent.

Any of chain transfer agents commonly employed for homo- or copolymerization of vinyl monomers can be employed. Examples of suitable chain transfer agents include mercaptan compounds, e.g., methyl mercaptan, t-butyl mercaptan, decyl mercaptan, benzyl mercaptan, lauryl mercaptan, stearyl mercaptan, n-dodecyl mercaptan, t-dodecyl mercaptan, mercaptoacetic acid, and mercaptopropionic acid; alcohols, e.g., methyl alcohol, n-propyl alcohol, isopropyl alcohol, t-butyl alcohol, benzyl alcohol, and allyl alcohol; hydrocarbons, e.g., ethylbenzene and cumene; and halogenated hydrocarbons, e.g., chloroethane, chloroform, carbon tetrachloride, and carbon tetrabromide.

The amount of the chain transfer agent used greatly influences solubilization of the dispersed resin. With the composition of the resin being equal, the larger the amount of the chain transfer agent, the more readily is the dispersed resin solubilized, leading to an increase in adhesion of the crosslinked film to a substrate. However, too high a level of addition results in reduction in water resistance and solvent resistance. A suitable amount of the chain transfer agent is usually from 0.01 to 3 parts by weight per 100 parts by weight of the solid resin content.

The aqueous crosslinking resin composition of the present invention can be prepared by mixing the thus prepared aqueous resin dispersion (I) with hydrazine derivative (II) having at least two hydrazino groups per molecule and by adding an alkali and/or an organic solvent to solubilize the resin content of aqueous resin dispersion (I) to a degree of at least 5% by weight.

Solubilization, i.e., addition of an alkali and/or an organic solvent, may be conducted before the commencement of emulsion polymerization for the preparation of aqueous resin dispersion (I), or before, simultaneously with, or after mixing of aqueous resin dispersion (I) and hydrazine derivative (II). In any case, the terminology "degree of solubilization" as used herein means a value determined as follows.

An aqueous resin dispersion is prepared under quite the same conditions as actually used for preparing an aqueous crosslinking resin composition of the present invention, except for using no hydrazine derivative (II). The resulting resin dispersion is diluted with water so as to have a nonvolatile content of 15% by weight. The nonvolatile content (W) of the resulting diluted resin dispersion is measured. The diluted resin dispersion is centrifuged at $1.8 \times 10^5$ g (acceleration of gravity) for 60 minutes, and the nonvolatile content (w) in the supernatant liquid is measured. The degree of solubilization (wt %) is calculated from equation:

$$\text{Degree of Solubilization} = w/W \times 100 \text{ (wt \%)}$$

Alkalis which can be used for solubilization include inorganic water-soluble alkalis, e.g., sodium hydroxide and potassium hydroxide; inorganic salts capable of providing an alkaline aqueous solution, e.g., sodium hydrogencarbonate and sodium pyrophosphate; aqueous ammonia; and organic amines.

Organic solvents which can be used for solubilization include those compatible with water and those incompatible with water but considerably soluble in water, such as alcohols, e.g., methyl alcohol, ethyl alcohol, n-propyl alcohol, isopropyl alcohol, n-butyl alcohol, sec-butyl alcohol, and ethylene glycol; cellosolves, e.g., methyl cellosolve, ethyl cellosolve, and butyl cellosolve, and esters thereof; carbitols, e.g., methylcarbitol, ethylcarbitol, and butylcarbitol, and esters thereof; tetrahydrofuran, dioxane, dimethylformamide, and ethyl acetate.

Solubilization may be effected by addition of the above-mentioned alkali alone, the above-mentioned organic solvent alone, or both of them. A preferred degree of solubilization is 10% by weight or more.

Hydrazine derivative (II) containing at least two hydrazino groups (hydrazine residual groups) per molecule includes dicarboxylic acid dihydrazides having from 2 to 10, and preferably from 4 to 6, carbon atoms, which are dehydrating condensation products between a dicarboxylic acid and hydrazine (e.g., oxalic acid dihydrazide, malonic acid dihydrazide, succinic acid dihydrazide, glutaric acid dihydrazide, adipic acid dihydrazide, sebacic acid dihydrazide, maleic acid dihydrazide, fumaric acid dihydrazide, and itaconic acid dihydrazide); and water-soluble aliphatic dihydrazines having from 2 to 4 carbon atoms (e.g., ethylene-1,2-dihydrazine, propylene-1,3-dihydrazine, and butylene-1,4-dihydrazine).

Also included in hydrazine derivative (II) are hydrazino-containing polymers represented by formula:

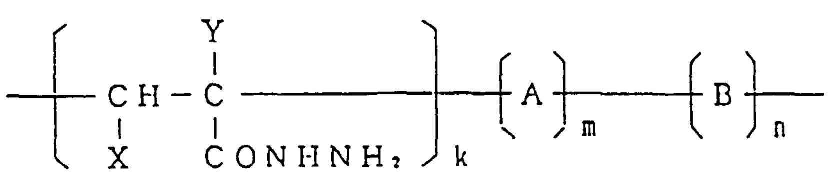

wherein X represents a hydrogen atom or a carboxyl group; Y represents a hydrogen atom or a methyl group; A represents a unit derived from acrylamide, methacrylamide, an acrylic ester, a methacrylic ester or maleic anhydride; B represents a unit derived from a monomer copolymerizable with the monomer of unit A; and k, m, and n each represents a number satisfying formulae:

$$2 \text{ mol\%} \leq k \leq 100 \text{ mol\%}$$

$$0 \text{ mol\%} \leq (m + n) \leq 98 \text{ mol\%}$$

$$(k + m + n) = 100 \text{ mol\%}$$

The details of these polymers are described, e.g., in JP-A-55-6535 (corresponding to U.S. Patent 4,230,525).

The proportion of hydrazine derivative (II) in the aqueous crosslinking resin composition is preferably such that the molar ratio of the hydrazino groups to the carbonyl groups of aqueous resin dispersion (I), i.e., $(-NHNH_2)/(>C=O)$ molar ratio, falls within a range of from 0.05 to 5, and more preferably from 0.4 to 1.2.

If desired, the aqueous crosslinking resin composition according to the present invention may further contain other aqueous resin dispersions, such as an aqueous resin dispersion obtained by general emulsion polymerization or a urethane resin emulsion, as long as the film properties of the composition are not impaired.

According to the end use, the aqueous crosslinking resin composition of the present invention may furthermore contain various additives, such as dispersants, lubricants, anti-foaming agents, solvents, film formation aids, plasticizers, anti-freezing agents, thickeners, air entrainers, water reducing agents, quick-setting agents, crosslinking accelerators, retarders, and tackifiers.

The aqueous crosslinking resin composition of the present invention finds various uses, with its crosslinkability being taken advantage of, as not only coating compounds but adhesives for plywood, woodworking adhesives, pressure-sensitive adhesives for paper or tapes, and fiber coating compounds.

The present invention will now be illustrated in greater detail with reference to Preparation Examples, Examples, and Comparative Examples. All the parts and percents are given by weight unless otherwise indicated.

PREPARATION EXAMPLE 1

In a reactor equipped with a temperature controller, an anchor stirrer, a reflux condenser, a feeder, a thermometer, and an inlet for nitrogen was charged 200 parts of water, and the reactor was then purged with nitrogen. The inner temperature was raised to 90°C, and mixture I having the following composition and an initiator solution comprising 2.5 parts of potassium persulfate and 85 parts of water were continuously fed to the reactor in small portions over a period of 3.5 hours to conduct a polymerization reaction. After completion of the addition, the mixture was kept at 90°C for an additional period of 2 hours to complete the reaction to obtain an aqueous resin dispersion having a solids content of 50% (hereinafter designated resin dispersion A).

| Composition of Mixture I: | |
|---|---|
| Water | 200 parts |
| Sodium salt of a sulfuric acid half-ester of an ethylene oxide (20 mol) adduct of p-nonyl phenol (hereinafter referred to as anionic emulsifying agent A) (35% aqueous solution) | 30 parts |
| Ethylene oxide (25 mol) adduct of p-nonyl phenol (hereinafter referred to as nonionic emulsifying agent B) (20% aqueous solution) | 20 parts |
| Methyl methacrylate | 200 parts |
| Butyl acrylate | 140 parts |
| Diacetone acrylamide | 40 parts |
| Acrylic acid | 20 parts |

PREPARATION EXAMPLES 2 TO 7

Aqueous resin dispersions (designated resin dispersion B to G) were prepared in the same manner as for resin dispersion A of Preparation Example 1, except for changing the kinds and amounts of the unsaturated monomers and

the dispersant as shown in Table 1 below.

PREPARATION EXAMPLES 8 TO 10

Aqueous resin dispersions (designated resin dispersion H to J) were prepared in the same manner as for resin dispersion A of Preparation Example 1, except for changing the kinds and amounts of the unsaturated monomers and the dispersant as shown in Table 2 below and a chain transfer agent as shown in the Table being added to composition of mixture.

PREPARATION EXAMPLE 11

In the same reactor as used in Preparation Example 1 were charged 300 parts of water and, as a copolymer dispersant, 40 parts of a 20% alkaline aqueous solution of a methyl methacrylate/butyl acrylate/diacetone acrylamide/acrylic acid copolymer (20/30/40/10; molecular weight: ca. 8,000) (hereinafter referred to as CD-1).

After purging the reactor with nitrogen, 10% of mixture II shown below was added thereto and heated to 90°C. Then, 10% of mixture III shown below was added thereto. The rest of mixture II and the rest of mixture III were simultaneously fed to the reactor in small portions over a period of 3 to 3.5 hours. After completion of the addition, the mixture was kept at 90°C for an additional period of 1.5 hours to complete the reaction. The reaction mixture was cooled to room temperature to obtain an aqueous resin dispersion (designated resin dispersion K).

| Composition of Mixture II: | |
|---|---|
| Methyl methacrylate | 180 parts |
| Butyl acrylate | 150 parts |
| Diacetone acrylamide | 60 parts |
| Methacrylic acid | 10 parts |
| t-Dodecylmercaptan (chain transfer agent) | 0.1 part |
| Composition of Mixture III: | |
| Water | 120 parts |
| Sodium persulfate | 2.5 parts |
| Sodium hydroxide | 4 parts |

PREPARATION EXAMPLES 12 AND 13

Aqueous resin dispersions (designated resin dispersions L and M) were prepared in the same manner as in Preparation Example 11, except for replacing the copolymer dispersant CD-1 with a 25% alkaline aqueous solution of a methyl acrylate/diacetone acrylamide/acrylic acid copolymer (20/20/60; molecular weight: ca. 6,000) (hereinafter referred to as CD-2) and also changing the kinds and amounts of the unsaturated monomers and chain transfer agent as shown in Table 2.

PREPARATION EXAMPLE 14

In the same reactor as used in Preparation Example 1 was charged 200 parts of isopropyl alcohol. The contents of the reactor were heated to 80°C, and mixture IV shown below was continuously fed thereto over 3 hours while stirring. After the addition, the reaction mixture was further kept at 80°C for an additional period of 1 hour to complete the reaction. The inner temperature was lowered to 30°C, and 60 parts of a 10% sodium hydroxide aqueous solution and 540 parts of water were added thereto to prepare an aqueous resin solution (designated resin solution N).

| Composition of Mixture IV: | |
|---|---|
| Methyl methacrylate | 100 parts |
| Butyl acrylate | 70 parts |
| Diacetone acrylamide | 20 parts |
| Acrylic acid | 10 parts |
| Azobisisobutyronitrile | 10 parts |

The composition of the polymerization system used for the preparation of resin dispersions A to M and resin solution N and the solids content of these resin dispersions or solution are shown in Tables 1 and 2 below.

TABLE 1

| | Resin Dispersion A | Resin Dispersion B | Resin Dispersion C | Resin Dispersion D | Resin Dispersion E | Resin Dispersion F | Resin Dispersion G |
|---|---|---|---|---|---|---|---|
| Polymerization System (part): | | | | | | | |
| Monomers[1]: | MMA (200) | SM (120) | MMA (200) | MMA (140) | MMA (200) | MMA (200) | MMA (80) |
| | BA (140) | 2EHA (80) | EA (100) | DAAM (240) | BA (100) | BA (136) | 2EHA (40) |
| | DAAM (40) | DAAM (140) | BA (60) | AA (20) | AA (100) | ACR (4) | DAAM (120) |
| | AA (20) | AA (60) | DAAM (40) | | | AA (60) | AA (160) |
| Dispersant[2]: | A (10.5) | SDBS (10) | A (8) | A (8) | A (8) | A (8) | A (4) |
| | B (4) | | B (4) | B (4) | B (4) | B (4) | B (8) |
| Chain transfer agent | - | - | - | - | - | - | - |
| Solids content of resin dispersion (wt%) | 50 | 45 | 50 | 50 | 50 | 45 | 40 |

TABLE 2

| | Resin Dispersion H | Resin Dispersion I | Resin Dispersion J | Resin Dispersion K | Resin Dispersion L | Resin Dispersion M | Resin Solution N |
|---|---|---|---|---|---|---|---|
| Polymerization System (part): | | | | | | | |
| Monomers[1)]: | SM (120) | MMA (200) | SM (80) | MMA (180) | SM (90) | SM (200) | MMA (100) |
| | 2EHA (70) | BA (140) | MMA (120) | BA (150) | MMA (90) | BA (120) | BA (70) |
| | DAAM (90) | DAAM (40) | BA (120) | DAAM (60) | BA (100) | ACR (20) | DAAM (20) |
| | MAA (120) | AA (20) | ACR (48) | MAA (10) | DAAM (60) | MAA (60) | AA (10) |
| | | | MAA (32) | | AA (60) | | |
| Disperasant[2)]: | SDBS (10) | A (10.5) | SDBS (10) | CD-1 (40) | CD-2 (10) | CD-2 (10) | - |
| | | B (4) | | | | | |
| Chain transfer agent[3)]: | MPA (0.2) | MPA (0.5) | DM (0.2) | DM (0.1) | BM (0.3) | - | - |
| Solids content of resin dispersion (wt%) | 40 | 50 | 50 | 47 | 45 | 45 | 20 |

Note (common to Tables 1 and 2):

1): MMA: Methyl methacrylate

BA: Butyl acrylate

DAAM: Diacetone acrylamide

AA: Acrylic acid

SM: Styrene

ACR: Acrolein

EA: Ethyl acrylate

MAA: Methacrylic acid

2EHA: 2-Ethylhexyl acrylate

2): A: Anionic emulsifying agent A

B: Nonionic emulsifying agent B

SDBS: Sodium dodecylbenzenesulfonate

3): MPA: Mercaptopropionic acid

DM: t-Dodecylmercaptan

BM: t-Butylmercaptan

EXAMPLE 1

A hundred parts of resin dispersion A was adjusted to pH 8.5 with a sodium hydroxide aqueous solution, and 5 parts of butyl cellosolve was added thereto. Three parts of adipic acid dihydrazide were further added thereto. The mixture was diluted with water so as to have a nonvolatile content of 30% to prepare a crosslinking resin composition. The terminology "nonvolatile content" as used here and the following Examples means a weight percentage of a residue when a resin composition is dried at 120°C for 30 minutes.

EXAMPLES 2 TO 12 AND COMPARATIVE EXAMPLES 1 TO 4

Crosslinking resin compositions were prepared in the same manner as in Example 1, except for making the alterations shown in Tables 3 to 5 below (the resin composition of Comparative Example 2 was non-crosslinking composition).

Each of the resin compositions obtained in Examples 1 to 12 and Comparative Examples 1 to 4 was evaluated in accordance with the following test methods. The results obtained are shown in Tables 3 to 5.

1) Water Resistance of Dry Film:

The resin composition was coated on a glass plate to a dry thickness of 500 μm and dried at 20°C for 1 week. The dry film was punched to prepared a 5-by-5 cm square specimen. The specimen was immersed in water at 20°C for 1 day, and the water absorption (wt%) was measured.

2) Solvent Resistance of Dry Film:

The same specimen as prepared in 1) above was immersed in toluene for 1 day, and the coefficient of linear expansion (%) of the side was measured.

3) Adhesion of Dry Film to Substrate:

The resin composition was coated on a polypropylene plate (hereinafter abbreviated as PP plate) or a polyester plate (hereinafter abbreviated as PET plate) to a dry thickness of 20 µm and dried at 20°C for 1 week. A peel test of the dry film on the substrate was conducted using an adhesive tape "Cello-Tape" (produced by Nichiban Co., Ltd.), and the results were rated as follows.

A No peeling occurred at all.
B Peeling occurred on part of the film.
C Peeling occurred on the entire film.

4) Hardness of Dry Film:

The resin composition was coated on a steel plate to a dry thickness of 20 µm and dried at 20°C for 1 week. The film on the substrate was scratched with a pencil to evaluate hardness according to JIS K-5400.

TABLE 3

| | Example 1 | Example 2 | Compar. Example 1 | Example 3 | Example 4 |
|---|---|---|---|---|---|
| Aqueous Crosslinking Resin Composition: | | | | | |
| Resin dispersion (part) | A (100) | G (100) | C (100) | I (100) | J (100) |
| Alkali (pH) | NaOH (8.5) | - | aq. ammonia (9.0) | NaOH (9.0) | aq. ammonia (7.0) |
| Organic solvent (part) | butyl cellosolve (10) | isopropyl alcohol (30) | isopropyl alcohol (20) | - | methyl cellosolve (30) |
| Degree of Solubilization (%) | 24 | 68 | ca. 2 | 60 | 100 |
| Hydrazine derivative (part) | adipic acid dihydrazide (3) | adipic acid dihydrazide (6.2) | adipic acid dihydrazide (3) | adipic acid dihydrazide (3) | adipic acid dihydrazide (4) |
| $(-NHNH_2)/(>C=O)$ molar ratio | 1.1 | 1.0 | 1.1 | 1.1 | 0.4 |
| Nonvolatile content (%) | 30 | 20 | 30 | 25 | 25 |
| Film Properties: | | | | | |
| Water resistance (%) | 5 | 81 | 17 | 14 | 21 |
| Solvent resistance (%) | 39 | 13 | 48 | 31 | 25 |
| Adhesion to PP plate | A | A | B | A | A |
| Adhesion to PET plate | A | A | C | A | A |
| Hardness | H | H | HB | 2H | 3H |

TABLE 4

| | Compar. Example 2 | Example 5 | Example 6 | Compar. Example 3 | Compar. Example 4 |
|---|---|---|---|---|---|
| Aqueous Crosslinking Resin Composition: | | | | | |
| Resin dispersion (part) | A (100) | K (100) | D (100) | E (100) | N (100) |
| Alkali (pH) | NaOH (8.5) | aq. ammonia (8.5) | aq. ammonia (8.5) | aq. ammonia (9.0) | NaOH (9.5) |
| Organic solvent (part) | butyl cellosolve (10) | isopropyl alcohol (10) | methyl cellosolve (10) | - | - |
| Degree of Solubilization (%) | 24 | 100 | 70 | 100 | 100 |
| Hydrazine derivative (part) | - | PAH* (1.0) | adipic acid dihydrazide (5) | adipic acid dihydrazide (3) | adipic acid dihydrazide (1.5) |
| $(-NHNH_2)/(>C=O)$ molar ratio | - | 0.3 | 0.3 | 0 | 1.4 |
| Nonvolatile content (%) | 30 | 25 | 25 | 25 | 20 |
| Film Properties: | | | | | |
| Water resistance (%) | 48 | 17 | 94 | 250 | 145 |
| Solvent resistance (%) | dissolved | 27 | 21 | dissolved | 120 |
| Adhesion to PP plate | B | A | A | B | A |
| Adhesion to PET plate | C | A | B | B | B |
| Hardness | B | 2H | 2H | 2H | HB |

TABLE 5

| | Example 7 | Example 8 | Example 9 | Example 10 | Example 11 | Example 12 |
|---|---|---|---|---|---|---|
| **Aqueous Crosslinking Resin Composition:** | | | | | | |
| Resin dispersion (part) | I (100) | F (100) | M (100) | L (100) | B (100) | H (100) |
| Alkali (pH) | - | NaOH (6.5) | aq. ammonia (8.0) | NaOH (6.0) | aq. ammonia (6.0) | - |
| Organic solvent (part) | isopropyl alcohol (20) | butyl cellosolve (10) | - | isopropyl alcohol (20) | isopropyl alcohol (20) | isopropyl alcohol (30) |
| Degree of Solubilization (%) | 37 | 73 | 24 | 68 | 82 | 29 |
| Hydrazine derivative (part) | adipic acid dihydrazide (3) | PAH* (6) | adipic acid dihydrazide (4) | PAH (4.0) | adipic acid dihydrazide (8) | adipic acid dihydrazide (5) |
| $(-NHNH_2)/(>C=O)$ molar ratio | 1.1 | 0.8 | 1.1 | 1.0 | 1.0 | 1.1 |
| Nonvolatile content (%) | 25 | 25 | 25 | 25 | 25 | 20 |
| **Film Properties:** | | | | | | |
| Water resistance (%) | 17 | 18 | 21 | 29 | 31 | 42 |
| Solvent resistance (%) | 28 | 85 | 25 | 18 | 12 | 15 |
| Adhesion to PP plate | A | A | A | A | A | A |
| Adhesion to PET plate | A | B | A | A | A | A |
| Hardness | 2H | 2H | 2H | 3H | 2H | 2H |

Note: * 30% isopropyl alcohol solution of a polyhydrazine compound obtained by reacting polymethyl acrylate (molecular weight: about 8,000) with hydrazine hydrate to a modification degree of about 30 mol%.

The aqueous crosslinking resin composition according to the present invention easily undergoes crosslinking between a carbonyl group and a hydrazino group at room temperature to form a crosslinked film. The crosslinked film exhibits excellent adhesion to a substrate, well-balanced resistance to water and solvents, and satisfactory hardness. Therefore, the aqueous crosslinking resin composition of the invention is highly useful as primers for plastics and metals, coating compounds for repairs of coatings.

**Claims**

1. An aqueous crosslinking resin composition comprising (I) an aqueous resin dispersion obtained by emulsion polymerization of a monomer mixture consisting of (a) 0.5% to 50% by weight of an unsaturated carboxylic acid monomer, (b) 0.5% to 60% by weight of a carbonyl-containing unsaturated monomer containing at least one carbonyl group based on an aldo group or a keto group, and (c) 30% to 99% by weight of other unsaturated monomer (s) copolymerizable with monomers (a) and (b), and (II) a hydrazine derivative having at least two hydrazino groups ($-NHNH_2$) per molecule, wherein the resin content in the aqueous resin dispersion (I) has been solubilized to a degree of at least 5% by weight by addition of an alkali and/or an organic solvent.

2. An aqueous crosslinking resin composition as claimed in Claim 1, wherein said aqueous resin dispersion (I) is a resin dispersion obtained by emulsion polymerization of a monomer mixture consisting of from 2 to 30% by weight of said monomer (a), from 5 to 50% by weight of said monomer (b), and said monomer (c).

3. An aqueous crosslinking resin composition as claimed in Claim 1, wherein said aqueous resin dispersion (I) is a resin dispersion obtained by emulsion polymerization in the presence of a chain transfer agent.

4. An aqueous crosslinking resin composition as claimed in Claim 3, wherein said chain transfer agent is present in an amount of from 0.01 to 3 parts by weight per 100 parts by weight of the solid resin content.

5. An aqueous crosslinking resin composition as claimed in Claim 1, wherein the resin content in said aqueous resin dispersion (I) has been solubilized to a degree of 10% by weight or more.

6. An aqueous crosslinking resin composition as claimed in Claim 1, wherein the molar ratio of the hydrazino group in said hydrazine derivative (II) to the carbonyl group in the resin of said aqueous resin dispersion (I) is from 0.05 to 5.

7. An aqueous crosslinking resin composition as claimed in Claim 6, wherein the molar ratio of the hydrazino group in said hydrazine derivative (II) to the carbonyl group in the resin of said aqueous resin dispersion (I) is from 0.4 to 1.2.

8. An aqueous crosslinking resin composition as claimed in Claim 1, wherein said aqueous resin dispersion (I) is a resin dispersion obtained by emulsion polymerization using, as a dispersant, a copolymer comprising (i) from 0.5 to 99.5% by weight of a carbonyl-containing monomer unit having at least one carbonyl group based on aldo or keto group and one polymerizable double bond per molecule, (ii) from 0.5 to 99.5% by weight of a monomer unit selected from the group consisting of a unit derived from a mono-olefinic unsaturated carboxylic acid having from 3 to 5 carbon atoms, a unit derived from a mono-olefinic unsaturated carboxylic acid amide having from 3 to 5 carbon atoms, a unit derived from an N-alkyl and/or N-alkylol derivative of a mono-olefinic unsaturated carboxylic acid amide having from 3 to 5 carbon atoms, and an amino-containing monomer unit, and (iii) not more than 70% by weight of a monomer unit selected from the group consisting of an alkyl acrylate or alkyl methacrylate unit having from 1 to 8 carbon atoms in the alkyl moiety thereof, an aromatic vinyl monomer unit, a vinyl halide unit, an ethylene unit, an acrylonitrile unit, a methacrylonitrile unit, a saturated carboxylic acid vinyl ester unit, a hydroxyl-containing monomer unit, and a 1,3-diene unit.

## Patentansprüche

1. Wäßrige vernetzende Harzzusammensetzung, umfassend (I) eine wäßrige Harzdispersion, erhalten durch Emulsionspolymerisation einer Monomerenmischung, bestehend aus (a) 0,5 bis 50 Gew.-% eines ungesättigten Carbonsäuremonomers, (b) 0,5 bis 60 Gew.-% eines Carbonyl-enthaltenden ungesättigten Monomers, das mindestens eine Carbonylgruppe auf der Basis einer Aldogruppe oder einer Ketogruppe enthält, und (c) 30 bis 99 Gew.-% eines anderen ungesättigten Monomers (anderer ungesättigter Monomerer), das (die) mit den Monomeren (a) und (b) copolymerisierbar ist, und (II) ein Hydrazinderivat, das mindestens zwei Hydrazinogruppen ($-NHNH_2$) pro Molekül aufweist, und worin der Harzgehalt in der wäßrigen Harzdispersion (I) bis zu einem Grad von mindestens 5 Gew.-% durch Zugabe von Alkali- und/oder einem organischen Lösungsmittel solubilisiert ist.

2. Wäßrige vernetzende Harzzusammensetzung nach Anspruch 1, **dadurch gekennzeichnet,** daß die wäßrige Harzdispersion (I) eine Harzdispersion ist, die erhalten wurde durch Emulsionspolymerisation einer Monomerenmischung bestehend aus 2 bis 30 Gew.-% des Monomers (a), 5 bis 50 Gew.-% des Monomers (b) und des Monomers (c).

3. Wäßrige vernetzende Harzzusammensetzung nach Anspruch 1, **dadurch gekennzeichnet,** daß die wäßrige Harzdispersion (I) eine Harzdispersion ist, die durch Emulsionspolymerisation in Gegenwart eines Kettenübertragungsreagens erhalten wurde.

4. Wäßrige vernetzende Harzzusammensetzung nach Anspruch 3, **dadurch gekennzeichnet,** daß das Kettenübertragungsreagens in einer Menge von 0,01 bis 3 Gew.-Teilen pro 100 Gew.-Teile des festen Harzgehaltes vorhanden ist.

5. Wäßrige vernetzende Harzzusammensetzung nach Anspruch 1, **dadurch gekennzeichnet,** daß der Harzgehalt in der wäßrigen Harzzusammensetzung (I) bis zu einem Grad von 10 Gew.-% oder mehr solubilisiert ist.

6. Wäßrige vernetzende Harzzsammensetzung nach Anspruch 1, **dadurch gekennzeichnet,** daß das Molverhältnis der Hydrazinogruppe im Hydrazinderivat (II) zur Carbonylgruppe im Harz der wäßrigen Harzdispersion (I) 0,05 bis 5 beträgt.

7. Wäßrige vernetzende Harzzusammensetzung nach Anspruch 6, **dadurch gekennzeichnet,** daß das Molverhältnis der Hydrazinogruppe im Hydrazinderivat (II) zur Carbonylgruppe im Harz der wäßrigen Harzdispersion (I) 0,4 bis 1,2 beträgt.

8. Wäßrige vernetzende Harzzusammensetzung nach Anspruch 1, **dadurch gekennzeichnet,** daß die wäßrige Harzdispersion (I) eine Harzdispersion ist, die erhalten wurde durch Emulsionspolymerisation, bei der als Dispergiermittel ein Copolymer verwendet wird, umfassend (i) 0,5 bis 99,5 Gew.-% einer Carbonyl-enthaltenden Monomereinheit mit mindestens einer Carbonylgruppe auf der Basis einer Aldo- oder Ketogruppe und einer polymerisierbaren Doppelbindung pro Molekül, (ii) 0,5 bis 99,5 Gew.-% einer Monomereinheit, ausgewählt aus der Gruppe bestehend aus einer von einer monoolefinisch ungesättigten Carbonsäure mit 3 bis 5 Kohlenstoffatomen abgeleiteten Einheit, einer von einem monoolefinisch ungesättigten Carbonsäureamid mit 3 bis 5 Kohlenstoffatomen abgeleiteten Einheit, einer von einem N-Alkyl und/oder N-Alkylolderivat eines monoolefinisch ungesättigten Carbonsäureamids mit 3 bis 5 Kohlenstoffatomen abgeleiteten Einheit und einer Aminoenthaltenden Monomereinheit, und (iii) nicht mehr als 70 Gew.-% einer Monomereinheit, ausgewählt aus der Gruppe bestehend aus einer Alkylacrylat- oder Alkylmethacrylat-Einheit mit 1 bis 8 Kohlenstoffatomen in ihrem Alkylteil, einer aromatischen Vinylmonomer-Einheit, einer Vinylhalogenid-Einheit, einer Ethylen-Einheit, einer Acrylnitril-Einheit, einer gesättigten Carbonsäurevinylester-Einheit, einer Hydroxylenthaltenden Monomereinheit und einer 1,3-Dien-Einheit.

## Revendications

1. Composition aqueuse de résine réticulante, comprenant :

   (I) une dispersion aqueuse de résine, obtenue par polymérisation en émulsion d'un mélange de monomères

consistant en :

(a) 0,5% à 50% en poids d'un monomère acide carboxylique insaturé ;

(b) 0,5% à 60% en poids d'un monomère insaturé à teneur en carbonyle, contenant au moins un groupe carbonyle sur la base d'un groupe aldo ou d'un groupe céto ; et

(c) 30% à 99% en poids d'autre(s) monomère(s) insaturé(s), copolymérisable(s) avec les monomères (a) et (b) ; et

(II) un dérivé d'hydrazine ayant au moins deux groupes hydrazino ($-NHNH_2$) par molécule,

la teneur en résine dans la dispersion aqueuse de résine (I) ayant été solubilisée à un degré d'au moins 5% en poids par addition d'un alcali et/ou d'un solvant organique.

**2.** Composition aqueuse de résine réticulante selon la revendication 1, dans laquelle ladite dispersion aqueuse de résine (I) est une dispersion de résine obtenue par polymérisation en émulsion d'un mélange de monomères consistant en :

- de 2 à 30% en poids dudit monomère (a) ;
- de 5 à 50% en poids dudit monomère (b) ; et
- ledit monomère (c).

**3.** Composition aqueuse de résine réticulante selon la revendication 1, dans laquelle ladite dispersion aqueuse de résine (I) est une dispersion de résine obtenue par polymérisation en émulsion en présence d'un agent de transfert de chaîne.

**4.** Composition aqueuse de résine réticulante selon la revendication 3, dans laquelle ledit agent de transfert de chaîne est présent dans une quantité de 0,01 à 3 parties en poids pour 100 parties en poids de la teneur en résine solide.

**5.** Composition aqueuse de résine réticulante selon la revendication 1, dans laquelle la teneur en résine dans ladite dispersion aqueuse de résine (I) a été solubilisée à un degré de 10% en poids ou davantage.

**6.** Composition aqueuse de résine réticulante selon la revendication 1, dans laquelle le rapport molaire du groupe hydrazino dans ledit dérivé d'hydrazine (II) au groupe carbonyle dans la résine de ladite dispersion aqueuse de résine (I) est de 0,05 à 5.

**7.** Composition aqueuse de résine réticulante selon la revendication 6, dans laquelle le rapport molaire du groupe hydrazino dans ledit dérivé d'hydrazine (II) au groupe carbonyle dans la résine de ladite dispersion aqueuse de résine (I) est de 0,4 à 1,2.

**8.** Composition aqueuse de résine réticulante selon la revendication 1, dans laquelle ladite dispersion aqueuse de résine (I) est une dispersion de résine obtenue par polymérisation en émulsion à l'aide, comme dispersant, d'un copolymère comprenant :

(i) de 0,5 à 99,5% en poids d'une unité de monomère à teneur en carbonyle, ayant au moins un groupe carbonyle sur la base d'un groupe aldo ou céto et une double liaison polymérisable par molécule ;

(ii) de 0,5 à 99,5% en poids d'une unité de monomère choisie dans le groupe constitué par une unité provenant d'un acide carboxylique à insaturation mono-oléfinique ayant de 3 à 5 atomes de carbone, une unité provenant d'un amide d'acide carboxylique à insaturation mono-oléfinique ayant de 3 à 5 atomes de carbone, une unité provenant d'un dérivé N-alkyle et/ou N-alkylol d'un amide d'acide carboxylique à insaturation mono-oléfinique ayant de 3 à 5 atomes de carbone, et une unité de monomère à teneur en amino ; et

(iii)pas plus de 70% en poids d'une unité de monomère choisie dans le groupe constitué par une unité d'acrylate d'alkyle ou de méthacrylate d'alkyle ayant de 1 à 8 atomes de carbone dans sa fraction alkyle, une unité de monomère vinyl aromatique, une unité d'halogénure de vinyle, une unité d'éthylène, une unité d'acrylonitrile, une unité de méthacrylonitrile, une unité d'ester vinylique d'acide carboxylique saturé, une unité de monomère

à teneur en hydroxyle, et une unité de 1,3-diène.